Europäisches Patentamt

European Patent Office

Office européen des brevets

(11) Numéro de publication: **0 402 206**
**A1**

## (12) DEMANDE DE BREVET EUROPEEN

(21) Numéro de dépôt: **90401460.2**

(22) Date de dépôt: **31.05.90**

(51) Int. Cl.⁵: **G01K 7/06, G01K 7/02**

(30) Priorité: **08.06.89 FR 8907585**

(43) Date de publication de la demande:
**12.12.90 Bulletin 90/50**

(84) Etats contractants désignés:
**AT BE DE ES GB IT NL**

(71) Demandeur: **SAUNIER DUVAL'EAU CHAUDE CHAUFFAGE - SDECC**
**Le Technipole 8, avenue Pablo Picasso**
**F-94132 Fontenay Sous Bois Cédex(FR)**

(72) Inventeur: **Graas, Patrick**
**Clos de Maloue, 3**
**B-1410 Waterloo(BE)**
Inventeur: **Pauwels, Francis**
**Rue de Lombardie, 2**
**B-1060 Bruxelles(BE)**

(74) Mandataire: **Lhuillier, René et al**
**ARMENGAUD JEUNE CABINET LEPEUDRY 6,**
**rue du Fg. St-Honoré**
**F-75008 Paris(FR)**

(54) **Thermocouple interrompu pour dispositif de sécurité électromagnétique notamment pour chaudière ou chauffe-bains à gaz.**

(57) L'organe assurant le pontage du tube de cuivre (2) est un étrier de liaison (12) formé d'une lamelle simple en forme de U, un enrobage, par exemple une résine plastique étant ensuite surmoulée au-dessus de l'étrier et d'une partie des cosses de raccordement pour assurer l'étanchéité le long de celles-ci et le long du tube de cuivre.

Application aux dispositifs de sécurité électromagnétique pour chaudière à gaz.

FIG.1

EP 0 402 206 A1

# Thermocouple interrompu pour dispositif de sécurité électromagnétique notamment pour chaudière ou chauffe-bains à gaz

L'invention qui se rapporte aux thermocouples pour dispositifs de sécurité électromagnétique notamment pour chaudières ou chauffe-bains à gaz concerne plus précisément un thermocouple interrompu pour raccordement à un circuit secondaire.

On sait qu'un thermocouple est essentiellement constitué d'un fil conducteur enrobé d'une gaine isolante, logé à l'intérieur d'un tube en cuivre, fil conducteur dont une extrémité est reliée par une soudure à un embout métallique soumis à la flamme de veilleuse, et dont l'autre extrémité est reliée par une brasure tendre à une pastille destinée à venir en contact étroit avec un embout magnétique. Le tube de cuivre extérieur est isolé de l'embout magnétique par une rondelle isolante mais relié à la partie externe de l'embout métallique. Entre la partie avant du thermocouple du côté de l'embout métallique, et la partie arrière du côté de l'embout magnétique, il est habituel d'interrompre ledit thermocouple pour le raccorder à un circuit secondaire par exemple le circuit d'un pressostat logé en un point approprié de l'appareil. Ledit circuit secondaire est monté en série avec le conducteur central ce qui fait qu'en cas d'interruption au niveau du contacteur du pressostat, le courant est coupé entre la partie avant et la partie arrière du thermocouple, comme si il y avait une anomalie au niveau de la veilleuse, et l'embout magnétique déclenche, mettant l'appareil en sécurité.

Jusqu'à présent, pour assurer le raccordement des deux parties interrompues du thermocouple à ce circuit secondaire, on prévoyait d'une part de souder une cosse sur chaque extrémité dénudée du fil conducteur central et de raccorder les deux parties séparées du tube de cuivre extérieur par un manchon en laiton formé de deux coquilles clipsables l'une à l'autre, qui enserrent les deux extrémités du thermocouple, et assurent le pontage du tube de cuivre. Mais cette pièce en laiton doit être conformée de façon particulière, ménageant des ouvertures pour le passage des cosses. Il faut aussi prévoir de loger à l'intérieur de cette pièce de raccordement, une plaque ou une bande isolante pour éviter tout contact électrique entre les extrémités du fil conducteur et les cosses, avec le manchon en laiton assurant le pontage. Tout cela conduit à prévoir des pièces laitons de configurations précises qui sont donc couteuses à exécuter et à monter, ainsi qu'un isolant approprié qui s'avère difficile à positionner. En outre ce type de raccordement n'est pas étanche à l'air qui peut donc pénétrer à l'intérieur du tube en cuivre du thermocouple et favoriser la formation d'oxyde non conducteur au niveau de la pointe du thermocouple, au détriment de son fonctionnement.

Ces inconvénients ont conduit la Demanderesse à rechercher une solution plus pratique et plus sûre pour le raccordement d'un circuit secondaire et qui assure une étanchéité parfaite à la pénétration d'air au niveau dudit raccordement.

L'objet de la présente invention se rapporte donc à un thermocouple interrompu pour dispositif de sécurité électromagnétique notamment pour chaudière ou chauffe-bains à gaz, constitué d'un fil conducteur logé à l'intérieur d'un tube en cuivre, reliant un embout métallique soumis à une flamme de veilleuse à un embout magnétique, et comportant des cosses de raccordement du fil conducteur à un circuit secondaire ainsi qu'un organe assurant le pontage du tube de cuivre extérieur, thermocouple sur lequel l'organe assurant le pontage du tube de cuivre est un étrier de liaison formé d'une lamelle simple en forme de U et selon lequel un enrobage isolant électriquement, par exemple une résine plastique est surmoulée au-dessus de l'étrier et d'une partie des cosses de raccordement pour assurer l'étanchéité le long du tube de cuivre et des sorties desdites cosses.

Avantageusement, chaque extrémité des branches verticales de l'étrier de liaison est conformée en demi-manchon correspondant au diamètre extérieur du tube de cuivre contre lequel elles s'appliquent et sur lequel elles sont brasées. De même, la lamelle simple formant l'étrier est munie sur toute sa longueur d'une nervure de rigidification.

Les caractéristiques de l'invention sont maintenant décrites sur la base d'un exemple non limitatif de réalisation et en référence aux dessins annexés qui représentent :

Figure 1 une vue en coupe du thermocouple interrompu sans son revêtement enrobant ;

Figure 2 une vue partielle de la liaison centrale du thermocouple selon la figure 1, recouverte d'un enrobage surmoulé.

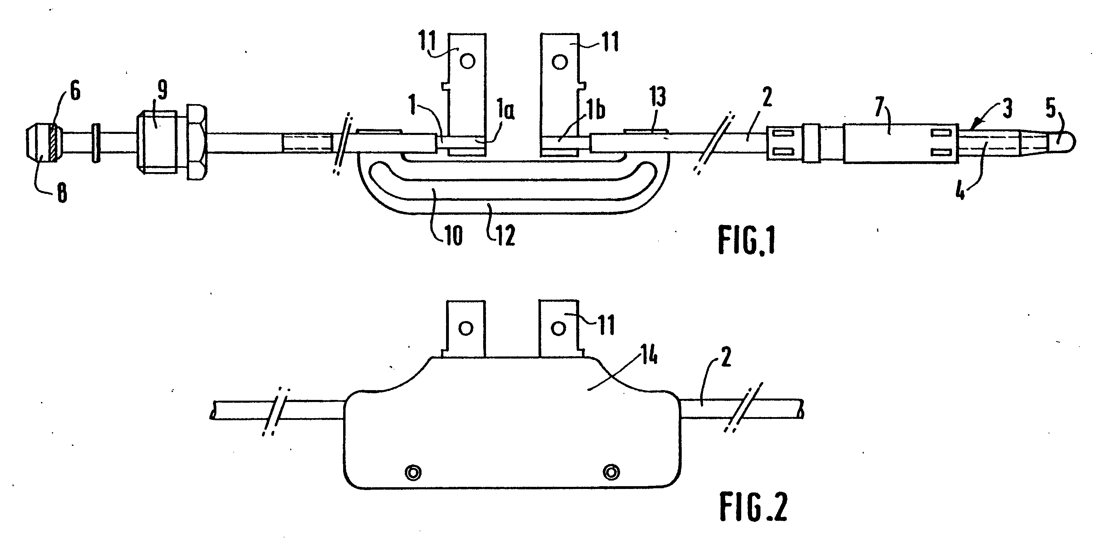

On voit à la figure 1 un thermocouple essentiellement constitué d'une âme formée d'un fil conducteur 1 enrobé d'une gaine isolante non représentée et d'un tube de cuivre extérieur 2. Du côté avant du thermocouple (à droite sur la figure), le fil 1 se prolonge par une tige d'extrémité 4 en constantan, laquelle est raccordée par une soudure 5 à l'extrémité d'un embout métallique 3. L'embout est coiffé, sur une partie de sa longueur par un conduit de positionnement 7. Du côté arrière du thermocouple le fil 1 est brasé à une pastille de contact 8, elle-même isolée du tube 2 par une rondelle isolante 6. Un ensemble vis écrou de fixation 9 assure une liaison étroite de cette pastille avec un embout magnétique non représenté.

La partie interrompue visible au centre de la figure résulte de la coupure du fil conducteur et du tube de cuivre extérieur. Les deux extrémités 1a et 1b du fil conducteur 1 ont été dégagées de leur gaine isolante pour pouvoir être soudées chacune à une cosse de raccordement 11. Sur le tube de cuivre 2 à proximité de chaque extrémité 1a et 1b du fil conducteur est brasé un étrier de liaison 12 en forme de U très ouvert, réalisé en laiton. Chaque extrémité 13 des branches verticales est conformée en demi-manchon correspondant au diamètre extérieur du tube de cuivre contre lequel elles s'appliquent et sur lequel elles sont brasées. Quant à l'étrier de liaison 12, il est formé d'une simple lamelle munie sur toute sa longueur d'une nervure 10 pour assurer sa rigidification.

L'ensemble de cette liaison, ainsi réalisée est ensuite noyé dans un enrobage 14, par exemple une résine plastique surmoulée par-dessus comme on le voit à la figure 2.

Le surmoulage 14 laisse évidemment apparent l'extrémité des cosses de raccordement 11. Ainsi, au niveau du tube de cuivre 2 et des cosses, l'enrobage assure une étanchéité parfaite interdisant l'entrée d'air à l'intérieur du thermocouple.

## Revendications

1.- Thermocouple interrompu pour dispositif de sécurité électromagnétique notamment pour chaudière ou chauffe-bains à gaz, constitué d'un fil conducteur logé à l'intérieur d'un tube en cuivre, reliant un embout métallique soumis à une flamme de veilleuse à un embout magnétique, et comportant des cosses de raccordement du fil conducteur à un circuit secondaire ainsi qu'un organe en forme de U assurant le pontage du tube de cuivre extérieur, caractérisé en ce que l'organe assurant le pontage du tube de cuivre (2) est un étrier de liaison formé d'une simple lamelle (12) et en ce qu'un enrobage (14) est surmoulé au-dessus de l'étrier et d'une partie des cosses de raccordement (11) pour assurer l'étanchéité le long du tube de cuivre et des sorties desdites cosses.

2.- Thermocouple selon la revendication 1, caractérisé en ce que chaque extrémité (13) des branches verticales de l'étrier de liaison (12) est conformée en demi-manchon correspondant au diamètre extérieur du tube de cuivre (2) contre lequel elles s'appliquent et sur lequel elles sont brasées.

3.- Thermocouple selon la revendication 1, caractérisé en ce que la lamelle simple formant l'étrier (12) est munie sur toute sa longueur d'une nervure (10) de rigidification.

FIG.1

FIG.2

Office européen
des brevets

# RAPPORT DE RECHERCHE EUROPEENNE

Numero de la demande

EP 90 40 1460

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | BE-A- 821 782 (CONTROLS CO. OF AMERICA) * Titre; fig.; page 2, paragraphe 3 - page 3, paragraphe 2 * --- | 1-3 | G 01 K 7/06 G 01 K 7/02 |
| X | US-A-2 344 192 (C. WANTZ) * Figure 2; page 2, lignes 24-47; colonne de gauche; page 2, colonne de droite, ligne 63 - page 3, colonne de gauche, ligne 23 * --- | 1 | |
| A | US-A-2 691 056 (J.A. WOLF) * Figures 1,2; colonne 3, lignes 32-60 * --- | 2 | |
| A | US-A-3 333 230 (H.A. McINTOSH) * Figures 1-5; ensemble du brevet * ----- | 1 | |

**DOMAINES TECHNIQUES RECHERCHES (Int. Cl.5)**

G 01 K

Le présent rapport a été établi pour toutes les revendications

| Lieu de la recherche | Date d'achèvement de la recherche | Examinateur |
|---|---|---|
| LA HAYE | 12-09-1990 | VISSER F.P.C. |